# EUROPEAN PATENT APPLICATION

(11) **EP 0 999 515 A2**
(43) Date of publication of application: **10.05.2000**
(21) Application number: 99121570.8
(22) Date of filing: 29.10.1999
(51) Int. Cl.: G06K 7/10

(54) **Multi-stage trigger for a data reading device**

(30) Priority: 02.11.1998 US 106872 P
(71) Applicant: PSC Scanning, Inc., Eugene, Oregon 97402-9120 (US); DATALOGIC S.P.A., I-40012 Lippo di Calderara di Reno (Bologna) (IT)
(72) Inventor: La, Chay K., Rochester, New York 14623 (US); Scanlon, Paul, Fairport, New York 14450 (US); Deloge, Steven, Rochester, New York 14622 (US); Canini, Frederico, Eugene, Oregon 97402-9150 (US); Zocca, Rinaldo, Eugene, Oregon 97402-9150 (US)
(74) Representative: Viering, Jentschura & Partner

(57) **Abstract**

A data reader includes a multi-stage trigger that uses tactile feedback to enhance user control of aiming and data acquisition. The multi-stage trigger may include a pivot member supported within the head portion of the data reader. The pivot member is adapted to actuate an aiming phase switch and then, when more pressure is applied to a trigger, a data acquisition phase switch. Alternatively, the multi-stage trigger may include an inner trigger member slideably received within an outer trigger member that is pivotally mounted within the head portion of the data reader. The inner trigger member may include a switch contacting member adapted to actuate the aiming phase switch, whereas the outer trigger member itself may actuate the data acquisition phase switch.

## Description

### CROSS-REFERENCE TO RELATED APPLICATION

This application claims the benefit of U.S. Provisional Application No. 60/106,872, filed November 2, 1998, hereby incorporated by reference as if set forth fully herein.

### BACKGROUND

The field of the present invention relates to optical systems for data reading and particularly to handheld readers having an improved multi-stage trigger.

Ideal for inventory management, material handling, manufacturing and especially package sorting and transportation, data reading devices are an indispensable tool for commercial and industrial environments as well as the front office. Whether stationary, handheld, or combination stationary/handheld, data reading devices are useful for reading a wide array of indicia found on consumer and industrial products, such as traditional linear or one-dimensional bar codes, two-dimensional symbologies, matrix array symbols, patterns and logos, signatures, and other images.

Another reader type are non-contact handheld devices employing a light source for illuminating the indicia to be read and an optical sensing system for detecting the light reflected from the indicia. In a scanning system, a light source, such as a gas laser diode or semiconductor laser diode, generates a coherent light beam which is repetitively scanned by a scanning mechanism and thereby swept across the target indicia, such as a bar code symbol. A photodetector senses light reflected or scattered from the code to detect the bars and spaces of the code symbols and thereby derive the encoded data. A variety of such moving-beam laser scanners and their scanning mechanisms are known as described in, for example, U.S. Patent Nos. 5,475,206 and 5,629,510 or U.S. Application Ser. No. 08/934,487, each of these disclosures hereby incorporated by reference.

As an alternative to the laser-based scanning system, a non-coherent light source, such as a light emitting diode (LED), may be used to flood the target indicia with light. Solid state imaging arrays, such as a one-dimensional imaging sensor (1D CCD or CMOS sensor) or a two-dimensional imaging sensor (2D CCD or CMOS sensor), detect the reflected or scattered light and determine the presence of a bar or a space and thereby derive the encoded data.

Regardless of which type of light source the data reader employs to illuminate the indicia, depending upon the application, it may be useful to provide the user information about what the optical sensing system is framing. For this purpose, the typical data reader includes an aiming system that allows the user to understand what the reader is "seeing" before attempting to decode. This system is useful because in some applications multiple optical code symbols may be in close proximity, and the user may need to read only certain symbols, or need to read symbols in a certain order. Moreover, the aiming process may use less time and/or less power than the reading process, so being properly aimed at the symbol before starting the reading process will optimize the overall operation.

Accordingly, the present inventors have recognized that in a preferred operational mode of a data reading device may comprise two phases: a first aiming phase used for accurately framing the target indicia and a second data acquisition phase during which the reader captures the optical data which was selected during the aiming phase. In order to conserve power and to allow reading a particular symbol in a closely spaced group of symbols, known scanners may provide independent control over the aiming and data acquisition phases by employing multiple triggers or a single dual action trigger. Known trigger mechanisms, however, are complex, costly, and inconvenient. Moreover, conventional trigger mechanisms fail to provide tactile feedback to a user for enhancing user control. Thus, there is a need for a data reading device having a simple, inexpensive, convenient, and tactile trigger mechanism that independently actuates the aiming system and the optical sensing system.

### SUMMARY OF THE INVENTION

The present invention is directed to an electro-optical reading device. In a preferred construction, the reading device includes a housing having a multi-stage trigger that uses tactile feedback to independently control the scanner operations such as activating first and second operational modes. In a preferred application, the trigger selectively actuates first and second operational phases: (1) an aiming mechanism, employed during a first aiming phase, and (2) an illumination mechanism and a sensor mechanism, employed during a second data acquisition phase for scanning or capturing the optical data selected by the user.

In a first aspect, the multi-stage trigger mechanism includes a pivot member supported within the head portion of the data reader via a fulcrum. When the pivot member is pivoted about the fulcrum, the pivot member presses against an aiming phase switch to initiate the aiming phase. Once the target indicia has been framed, the user, with the same, continuous, smooth action, may further pull against the trigger in order to contact a data acquisition phase switch to initiate the data acquisition phase.

In a second aspect, a device for electro-optically reading inclicia may include a multi-stage trigger having a first, outer trigger member and a second, inner, trigger member slidably received within the outer trigger member. The outer trigger member is pivotally supported within the head portion of the data reader. The inner trigger member may preferably include a switch contacting member extending therefrom. The switch contacting member is arranged to actuate an aiming phase switch to initiate the aiming phase. The outer trigger member is adapted to actuate the data acquisition phase switch to initiate the data acquisition phase. Various other embodiments may utilize some but not all of the above elements, or may include additional refinements, while obtaining the benefit of an improved multi-stage trigger that uses tactile feedback to enhance user control.

### BRIEF DESCRIPTION OF THE DRAWINGS

The various objects, features, and advantages of the present invention may be better understood by examining the Detailed Description of the Preferred Embodiments found below, together with the appended figures, wherein:
Fig. 1 is a side view of a handheld scanner as may be utilized by a preferred embodiment;
Fig. 2 is a diagrammatic side view of an example scan module;
Fig. 3 is a perspective, exploded view of another example scan module;
Fig. 4 is a perspective, exploded view of a handheld scanner and a multi-stage trigger mechanism according to a first preferred embodiment;
Fig. 5 is a diagrammatic side view of the multi-stage trigger mechanism of Fig. 4 in an at-rest position;
Fig. 6 is a diagrammatic side view of the multi-stage trigger mechanism of Fig. 4 in a first actuated position;
Fig. 7 is a diagrammatic side view of the multi-stage trigger mechanism of Fig. 4 in a second actuated position;
Fig. 8 is a perspective, exploded view of a handheld scanner and a multi-stage trigger mechanism according to a second preferred embodiment;
Fig. 9 is a diagrammatic side view of the multi-stage trigger mechanism of Fig. 8 in an at-rest position;
Fig. 10 is a diagrammatic side view of the multi-stage trigger mechanism of Fig. 8 in a first actuated position; and
Fig. 11 is a diagrammatic side view of the multi-stage trigger mechanism of Fig. 8 in a second actuated position.

### DETAILED DESCRIPTION OF THE PREFERRED EMBODIMENTS

The preferred embodiments will now be described with respect to the drawings. To facilitate the description, any numeral identifying an element in one figure will represent the same element when used in any other figure.

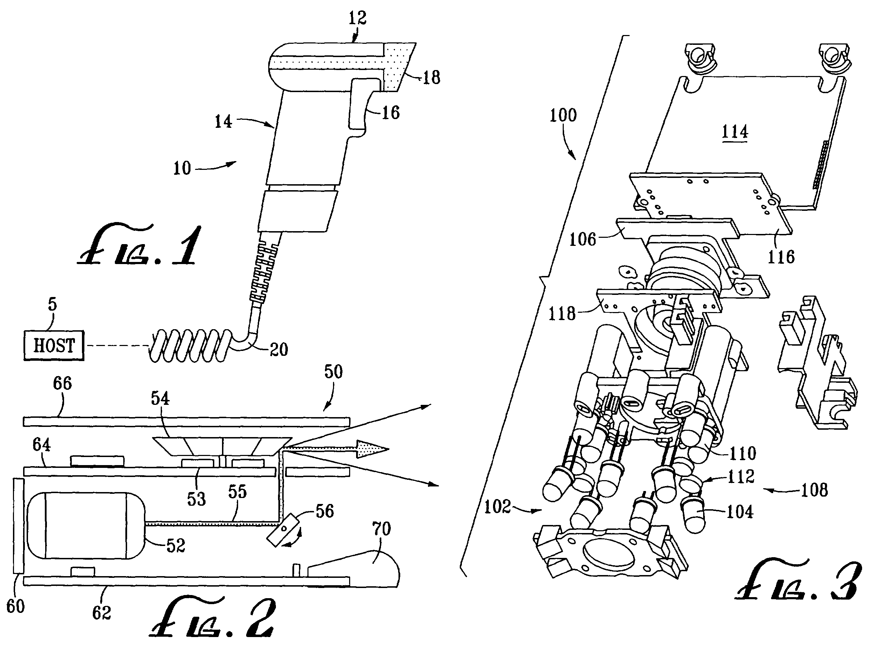

Fig. 1 illustrates an example of a data reading device such as a bar code reader 10 configured as a handheld gun-shaped device constructed of a lightweight plastic housing having a head portion 12 and pistol-grip type handle portion 14. The head portion 12 contains a removable scan module or assembly that contains a light source, a detector, and the optics and signal processing circuitry.

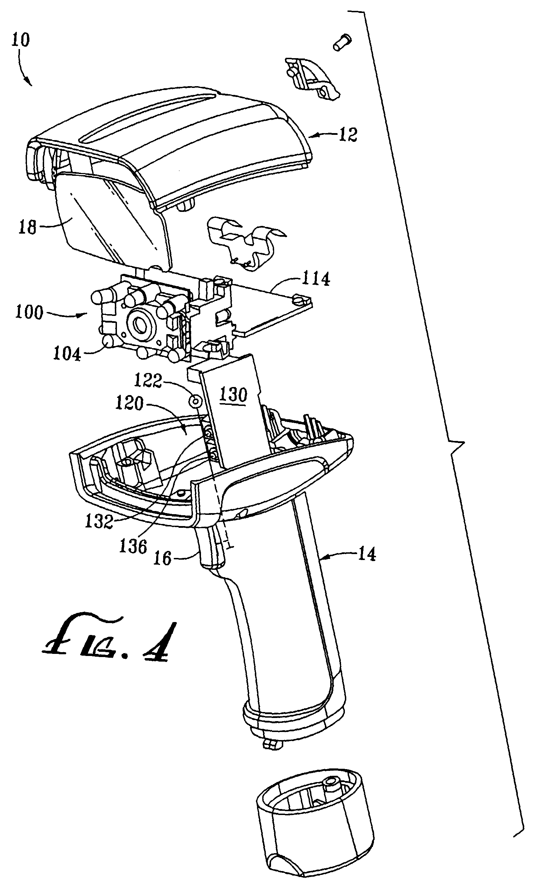

Fig. 2 illustrates an embodiment for a laser scan module 50 usable in the scanner 10 of Fig. 1. The scan assembly 50 may include a laser diode 52 producing a light beam 55 which is scanned by one or more scanning mechanisms and then exits the window 18. In particular, Fig. 2 illustrates a rotating polygon mirror assembly 54 driven by motor coils 53. The mirror 56 may comprise a stationary fold mirror, in which case the polygon mirror 54 would scan the beam 55 to produce one or more parallel scan lines. Alternately, the mirror 56 may comprise a dithering mirror assembly whereby in combination with the polygon mirror 54 could generate a two-dimensional scan pattern such as an asterisk pattern.

The components of the scan assembly 50 may be mounted to a suitable chassis and contained within an enclosure the sides of which may be part of the chassis or integrated into printed circuit boards 60, 62, 64, 66. The assembly 50 includes a collection system which may be retrodirectional or non-retrodirectional. The assembly 50 illustrated include a non-retrodirectional system comprising a detector and toroidal collection lens 70.

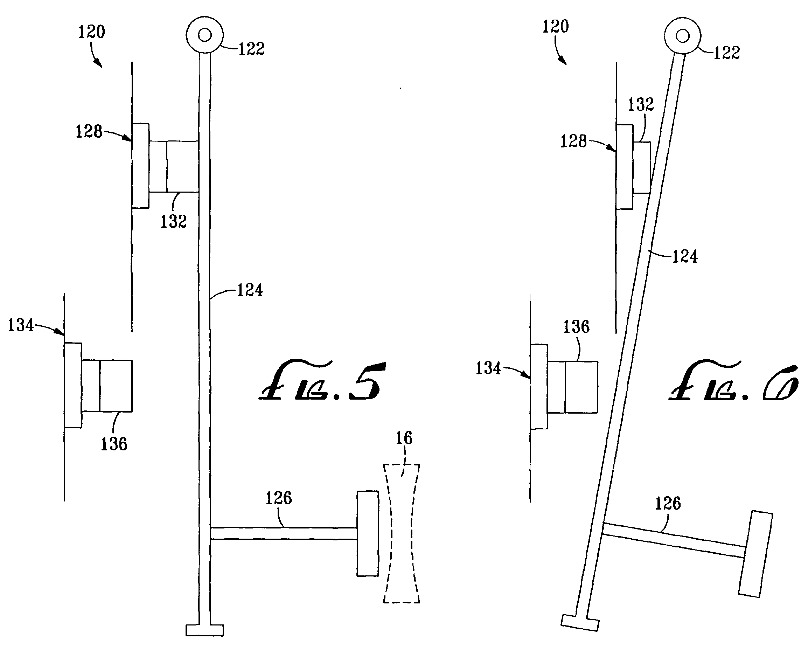

Other types of reading mechanisms may be employed in the head portion 12 of the data reader 10 such as the imager scan assembly 100 incorporating detectors based on solid state imaging arrays shown for example in Fig. 3. The scan assembly 100 may include an illumination mechanism 102 comprising a plurality of illumination LED's 104 for producing light which exits the window 18 and floods the target indicia. The reflected or scattered image is then captured by a solid state sensor mechanism 106, such as a one-dimensional CCD or CMOS sensor or a two-dimensional CCD or CMOS sensor.

The imaging optical sensor system of scan assembly 100 or the laser-based optical system of scan assembly 50 may include a pointer mechanism. As shown for example in Fig. 3, the pointer mechanism 108 of scan assembly 100 may comprise a plurality of pointer LED's 110 for producing light beams which are respectively focused by individual pointing lenses 112 before exiting the window 18. The components of the scan assembly 100 may be mounted to a suitable chassis and contained within an enclosure the sides of which may be part of the chassis or integrated into printed circuit boards 114, 116, 118.

Referring again to Fig. 1, the reader 10 may be attached to a host 5 via a cable 20, connected or incorporated into a portable data terminal, or may be cordless, powered by an internal battery, communicating with the host via wireless link or storing data in memory for periodic download, such as when integrated in a portable data terminal. In operation, the user generally aims the reader 10 at a label or product to be scanned, making sure the light-transmissive window 18 in the front end of the scan head portion 12 is directed at the target indicia. The user then presses or pulls against a trigger 16 on the handle portion 14 to initiate the reading process.

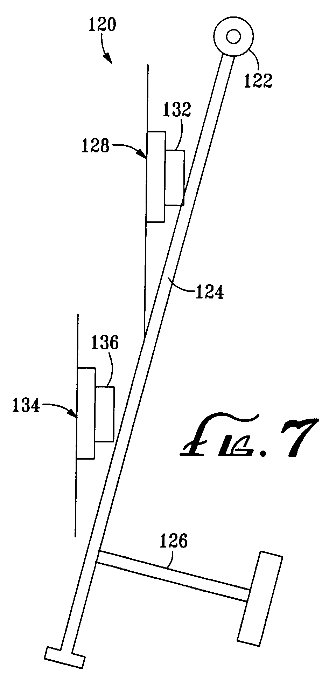

Figs. 4-7 illustrate a trigger system having a multi-stage trigger mechanism 120 according to a first preferred embodiment. Advantageously, the multi-state trigger mechanism 120 is adapted to tactily provide independent control of an aiming means, such as pointer mechanism 108, employed during the aiming phase, and an optical sensing system that may include for example illumination mechanism 102 and sensor mechanism 106, which is employed during the data acquisition phase for reading the optical data selected by the user.

Fig. 4 illustrates the multi-stage trigger mechanism 120 being supported within the head portion 12 of the reader 10 and extending into the handle portion 14 thereof. In particular, Fig. 4 illustrates the trigger mechanism 120 supported within the head portion 12 beneath the imager scan assembly 100 of Fig. 3 via a fulcrum 122. While Fig. 4 shows the trigger mechanism 120 applied to an imager scan assembly, trigger mechanism 120 is applicable to laser-based scan assemblies.

Any controllable mechanism for producing an aiming function and a reading function may be controlled by the multi-stage trigger disclosed herein. For example, U.S. Application Serial No. 08/792,829, hereby incorporated by reference, discloses a mechanism which produces both an aiming beam and a scanning beam using the same rotating polygon and laser.

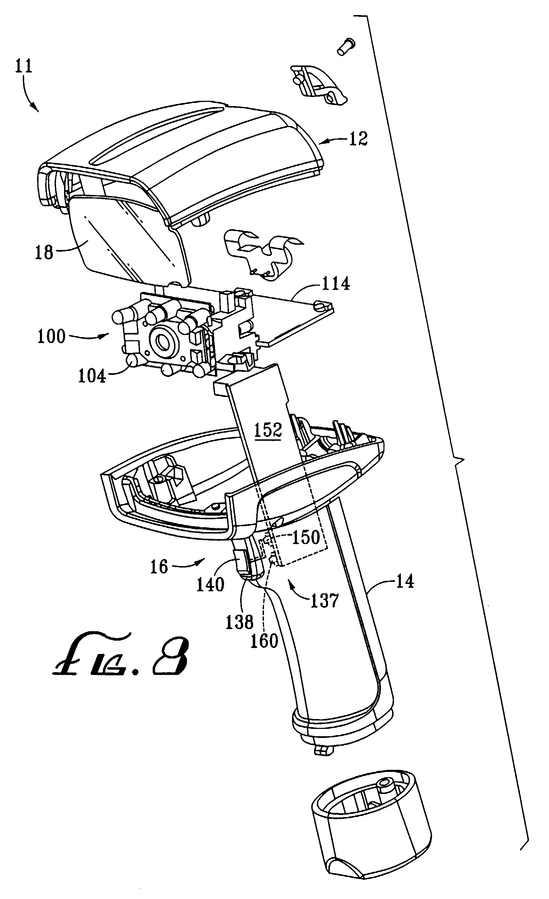

Fig. 5 illustrates details of a trigger mechanism 120 including a pivot member 124 pivotally mounted to a fulcrum 122. The pivot member 124 is preferably "thin" where thin means the pivot member 124 is sufficiently flexible so as to realize the below-identified actuations. The pivot member 124 may include a depending member 126 in communication with the outer trigger body 16 such that actuation of the trigger 16 causes the pivot member 124 to pivot or rotate about the fulcrum 122. When the pivot member 124 is pivoted about the fulcrum 122, the pivot member 124 presses against an aiming phase switch 128 mounted to a handle printed circuit board 130 (see Fig. 4).

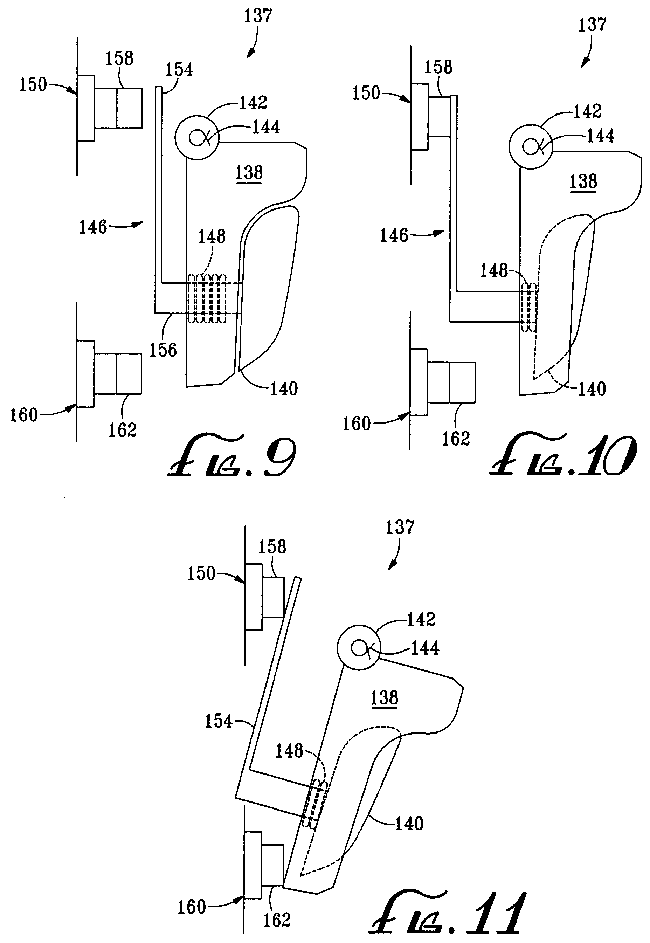

When pressed against the aiming phase switch 128, which is electronically connected to the pointing mechanism 108, a stem 132 of the switch 128 moves from its fully extended position (as shown in Fig. 5) to its retracted position (as shown in Figs. 6 and 7). The stem 132 is preferably elastomeric and may be made, for example, of rubber. When the switch 128 is retracted, the aiming phase is initiated. When initiated, the pointer LED's 110 of the pointer mechanism 108 are energized and a "pointer beam" is created to allow the user to effectively aim the optical sensing system. Should the user desire to stop the aiming phase, the user need only release the outer trigger 16.

Once the target indicia has been framed by the pointer mechanism 108, the user, with the same, continuous, smooth action, may further pull against the outer trigger 16 in order to initiate the data acquisition phase. In particular, additional pressure on the outer trigger 16 causes the pivot member 124 to make contact with a data acquisition phase switch 134 mounted to the handle printed circuit board 130 proximate the aiming phase switch 128.

The data acquisition phase switch 134, which is electronically connected to the illumination mechanism 102 and the sensor mechanism 106, includes a stem 136 adapted to move from an "off" or fully extended position (as shown in Figs. 5 and 6) to an "on" or retracted position (as shown in Fig. 7). The stem is preferably elastomeric and may be made of rubber. When the switch 134 is on, the data acquisition phase is initiated. Optionally, when switch 134 is actuated, in order to further conserve power, the aiming phase may simultaneously be terminated such that the pointer mechanism 108 is no longer being energized. When the data acquisition phase is initiated, the illumination LED's 104 flood the target indicia with light wherein the sensor mechanism 106 captures the reflected image for decoding purposes.

The flexibility of the pivot member 124 and the deformation of the stems 132, 136 of the aiming phase switch 128 and the data acquisition phase switch 134, respectively, advantageously realize the above-identified smooth and tactile trigger action which is simple, inexpensive, and convenient. In particular, the flexibility of the pivot member 124 provides certain resistance or bias the user can feel when manually engaging the outer trigger 16. Such tactile feedback allows the user to identify which trigger switch 128, 134 has been pushed and thereby independently control the aiming phase and the data acquisition phase. In lieu of this preferred arrangement, electrical trigger switches that require different forces to be pushed may also provide sufficient tactile feedback to identify which trigger switch has been pushed and thereby independently control the aiming phase and the data acquisition phase.

Figs. 8-11 illustrate a data reader 11 having a multi-stage trigger mechanism 137 according to a second preferred embodiment. While Fig. 8 shows the tactile trigger mechanism 137 as applied to an imager scan assembly, trigger mechanism 137 is also applicable to laser-based scan assemblies. Turning in detail to Figs. 8-11, the multi-stage trigger mechanism 137 includes a trigger body 16 having an outer trigger member 138 and an inner trigger member 140 slidably received within the outer trigger member 138. The outer trigger member 138 is pivotally mounted to a fulcrum 142 supported within the head portion 12 of the reader 11. The outer trigger member 138 is preferably biased against the fulcrum 142 via a spring, such as torsion spring 144 shown in Figs. 9-11, which works to maintain the outer trigger member 138 in its at-rest position (shown in Figs. 9 and 10) until sufficient force is applied to the trigger 16 to overcome the resistance of the spring 144.

The inner trigger member 140 includes a switch contacting member 146 extending therefrom. The switch contacting member 146 is preferably biased within the outer trigger member 138 via a spring, such as compression spring 148 shown in Figs. 9-11, which works to maintain the inner trigger member 140 in its at-rest position (shown in Fig. 9) until sufficient force is applied to the trigger 16 to overcome the resistance of the spring 148. Spring 148 is preferably not as strong or resilient as spring 144. In this manner, when the user presses the trigger 16, the first movement is always from the inner trigger member 140, as shown in Fig. 10.

The switch contacting member 146 is arranged within the head portion 12 of the reader 11 such that, when the user applies pressure against the inner trigger member 140 and overcomes the resistance of its spring 148, the switch contacting member 146 makes contact with an aiming phase switch 150. As shown for example in Fig. 8, the aiming phase switch 150 may be mounted to a handle printed circuit board 152 that extends into the handle portion 14 of the reader 11.

Viewed from the side, the switch contacting member 146 illustrated in Figs. 9-11 is L-shaped, with its first leg member 154 extending from the inner trigger member 140 and through the outer trigger member 138. Initial pressure against the trigger 16 causes the inner trigger member 140 to slide within the outer trigger member 138 toward the aiming phase switch 150. This movement in turn causes the second leg member 154 of the switch contacting member 146 to contact and apply pressure against the aiming phase switch 150.

Once sufficient pressure has been applied, the stem 158 of the aiming phase switch 150 moves from its fully extended position (as shown in Fig. 9) to its retracted position (as shown in Figs. 10 and 11). When retracted, the aiming phase switch 150 actuates the pointer mechanism 108 and the aiming phase is initiated as described above. Releasing the trigger 16 advantageously stops the aiming phase.

The data acquisition phase is initiated by applying further pressure against the trigger 16. In particular, once the target indicia has been framed by the pointer mechanism 108, the user, with the same, continuous, smooth action, pulls harder against the trigger 16. As the inner trigger member 140 has reached the end of its stroke within the outer trigger member 138 upon actuation of the pointer mechanism 108, additional trigger pressure will overcome the resistance of the outer trigger member spring 144. This movement in turn causes the outer trigger member 138 to pivot or rotate about the fulcrum 142 until the outer trigger member 138 itself makes contact with a data acquisition phase switch 160.

Once enough pressure is applied, the stem 162 of the data acquisition phase switch 160 moves from its "off" or fully extended position (as shown in Figs. 9 and 10) to its "on" or retracted position (as shown in Fig. 11). When the switch 160 is on, the data acquisition phase is initiated and optionally, in order to further conserve power, the aiming phase may simultaneously be terminated wherein the pointer mechanism 108 is no longer being energized. When the data acquisition phase is initiated, the illumination LED's 104 flood the target indicia with light wherein the sensor mechanism 106 captures the reflected image for decoding purposes.

As shown in Figs. 9-11, each stem 158, 162 of switches 150, 160 is preferably elastomeric, whereas as switch contacting member 146 is preferably non-elastomeric. In lieu of this preferred arrangement, electrical trigger switches that require different forces to be pushed may also provide sufficient tactile feedback to identify which trigger switch has been pushed and thereby independently control the aiming phase and the data acquisition phase. Thus, the biased trigger members 138, 140 provide certain resistance or bias the user can feel when manually engaging the trigger 16. Such tactile feedback allows the user to identify which trigger switch 150, 160 has been pushed and thereby independently control the aiming phase and the data acquisition phase.

While Figs. 9-11 illustrate a torsion spring 144 and a compression spring 148 arrangement where the compression spring 148 is contained within the outer trigger member 138, the compression spring 148 may be contained outside the outer trigger member 138. Alternatively, the outer trigger member 138 and the inner trigger member 140 may be configured such that a separate inner trigger member spring 148 need not be employed. For example, the inner trigger member 140 may itself be a leaf spring having a discrete, yet weaker resiliency than that of the outer trigger member spring 144.

The multi-stage trigger may be used to control any multiple functions of the scanner. In a first example, Application Serial No. 08/792,829 discloses a scanner which switches between a first scanning mode in which a single scan line is produced and a second scanning mode in which a scan pattern of multiple intersecting scan lines is produced. For example, the multi-stage trigger disclosed herein may be used to activate the first scanning mode by actuating the trigger 16 to the first position and activate the scanner to the second scanning mode by actuating the trigger to the second position.

In a second example, the multi-stage trigger may control the operation of the scanner 50 of Fig. 2. Moving the trigger 16 to the first position will actuate the first switch 132 and actuation of the first switch 132 will activate the laser 52 and the polygon mirror 54 thereby creating a first scan pattern. At this first stage, the mirror 56 does not pivot and remains stationary. Moving the trigger 16 to the second position actuates the second switch 134. Actuation of the second switch 134 prompts the scanner into a second mode of operation activating the motor mechanism to dither the mirror 56 which in combination with the polygon mirror 54 creates a complex, multi-line pattern such as an asterisk scan pattern.

Thus the switches 132, 134 of Figs. 4-7 and the switches 150, 160 of Figs. 8-11 may serve to activate various scanner operations including
-- activating and deactivating an aiming beam;
-- changing focus of the scanner, for example the first switch activating reading with the scanner set focused to a first distance, the second switch changing focus to a second distance;
-- changing between scan patterns or length of scan line;
-- changing scanning speeds;
-- changing some other reading or decoding property.

While preferred embodiments are disclosed herein, many variations are possible which remain within the concept and scope of the invention. Such variations would become clear to one of ordinary skill in the art after inspection of the specification and drawings herein. The invention therefore is not to be restricted except within the spirit and scope of the appended claims.

## Claims

1. A multi-stage trigger for a data reader, comprising:
a first switch for actuating a first operational mode;
a second switch for actuating a second operational mode; and
a pivot member for engaging the first switch and the second switch.

2. A multi-stage trigger according to claim 1 wherein the first switch is elastomeric.

3. A multi-stage trigger according to claim 2 wherein the second switch is elastomeric.

4. A multi-stage trigger according to claim 1 wherein the first switch is disposed nearer to the pivot member than the second switch.

5. A multi-stage trigger according to claim 1 wherein the first mode comprises an aiming phase for the data reader and the second mode comprises a data acquisition phase for the data reader.

6. A multi-stage trigger for a data reader, comprising:
a first switch for actuating a first mode;
a second switch for actuating a second operational mode;
a trigger body comprising an outer trigger member for engaging the second switch and an inner trigger member disposed within the outer trigger member for engaging the first switch.

7. A multi-stage trigger according to claim 6 wherein the first mode comprises an aiming phase for the data reader and the second mode comprises a data acquisition phase for the data reader.

8. A multi-stage trigger according to claim 6 wherein the outer trigger member is biased against movement toward the second switch.

9. A multi-stage trigger according to claim 8 wherein the inner trigger member is biased against movement toward the first switch.

10. A multi-stage trigger according to claim 9 wherein the outer trigger member is more biased against movement toward the second switch than the inner trigger member is biased against movement toward the first switch.

11. A multi-stage trigger according to claim 6 wherein the inner trigger member is slidably disposed within the outer trigger member.

12. A multi-stage trigger according to claim 11 wherein the inner trigger member is biased against movement within the outer trigger member.

13. A multi-stage trigger according to claim 6 wherein the inner trigger member includes a switch contacting member.

14. A multi-stage trigger according to claim 13 further comprising a spring disposed on the switch contacting member.

15. A multi-stage trigger according to claim 6 wherein the first switch and the second switch are elastomeric.

16. A data reading device comprising:
a hand-held scanner housing;
an optical scanning system contained within the housing;
a first switch for actuating a first operational mode;
a second switch for actuating a second operational mode; and
a multi-stage trigger mechanism on the housing having a tactile trigger member for engaging the first switch and the second switch, wherein the trigger member provides tactile feedback to a user such that the user is able to identify which trigger switch has been engaged and thereby selectively actuating the first operational mode and the second operational mode.

17. A data reading device according to claim 16 further comprising
means for producing an aiming beam in the first operational mode;
means for activating data acquisition during the second operational mode.

18. A data reading device according to claim 16 wherein the trigger member is pivotally mounted to the housing.

19. A data reading device according to claim 16 wherein the trigger member is biased against movement toward the first switch and the second switch.

20. A data reading device according to claim 16 wherein the trigger member is flexible.

21. A data reading device according to claim 16 wherein the first switch and the second switch are elastomeric.

22. A data reading device according to claim 16 wherein the first switch is disposed nearer to the trigger member than the second switch.

23. A data reading device according to claim 16 wherein the trigger member comprises an outer trigger member and an inner trigger member.

24. A data reading device according to claim 23 wherein the inner trigger member is slidably disposed within the outer trigger member.

25. A data reading device according to claim 24 wherein the inner trigger member includes a switch contacting member, and the data reading device further comprises a spring disposed on the switch contacting member.

26. A data reading device according to claim 16 wherein the data reader comprises a laser scanner, wherein during the first operational mode the scanner produces a single line scan pattern and during the second operational mode the scanner produces a complex multi-line pattern.

27. A data reading device according to claim 16 wherein the optical scanning system comprises a CCD imaging system.

28. A data reading device according to claim 16 wherein the optical scanning system comprises a laser scanner.

29. A method of data reading comprising the steps of
providing a hand-held data reader with a multi-stage trigger mechanism which selectively engages a first switch and a second switch;
depressing the trigger mechanism to a first location and thereby actuating the first switch;
activating a first operational mode upon actuation of the first switch;
depressing the trigger mechanism past the first location to a second location and thereby actuating the second switch;
activating a second operational mode upon actuation of the second switch.

30. A method according to claim 29 further comprising
providing the trigger mechanism with tactile feedback to enable a user to identify which trigger switch has been engaged.
